# EUROPEAN PATENT APPLICATION

(11) **EP 0 618 514 A1**
(43) Date of publication of application: **05.10.1994**
(21) Application number: 94301980.2
(22) Date of filing: 18.03.1994
(51) Int. Cl.: G03G 15/04, G03G 19/00, G03G 15/22

(54) **Media exposure system**

(30) Priority: 31.03.1993 IL 10524293
(71) Applicant: SCITEX CORPORATION LTD., IL-46103 Herzlia Bet (IL)
(72) Inventor: David, Ilan Ben, Petach Tikva (IL)
(74) Representative: Hillier, Peter

(57) **Abstract**

A method of exposing media and a system for performing the method are disclosed. The system includes an imaging assembly (12) and a light source (16). The imaging assembly (12) creates a physical image on a reflective imaging surface (22). The light source (16) illuminates the imaging surface and reflects the image towards a medium (18) to be exposed. In one embodiment the imaging assembly is a magnetic imaging assembly and the reflective surface (22) is magnetic. In another embodiment, the imaging assembly includes the following: a surface having a photoconductive layer, an electrostatic charger which charges the photoconductive layer, a laser writing system for locally discharging the photoconductive layer, a developer system for providing toner particles to charged portions of the photoconductive layer and a magnet for maintaining the toner particles on the surface while the light source illuminates the toner particles.

## Description

### FIELD OF THE INVENTION

The present invention relates to media exposure systems generally, to media exposure systems utilizing an intermediary imaging assembly in particular.

### BACKGROUND OF THE INVENTION

Various types of media exposure systems are known in the art. For example, media can be exposed with scanned laser light, such as when printing a film, or with an ultraviolet (UV) light. In UV light exposure systems, an optical mask is typically placed over the medium and the UV light is shined onto the combined mask and medium, thereby transferring the image on the mask onto the medium.

The Scitex Raystar is an exemplary film exposer utilizing a scanned laser beam. The Misomex Step and Repeat System is an known UV light exposure system.

Media exposure systems are also used in conjunction with paper printing systems, the best known examples of which are laser printers and xerographic copiers. In these systems, the medium exposed is a light sensitive drum and the exposure system creates a latent image on the drum. The latent image is developed with toner particles as the drum passes a developer station. At another station, the image, as defined by the toner particles, is transferred to paper when the paper comes in contact with the drum.

The above described printing method can be effected in a number of ways, such as xerography and magnetography. Xerography creates a latent image on a photoconductive drum and magnetography creates the latent image on a magnetic tape, similar to the magnetic tape utilized in tape recorders to store sound signals. The latent image is developed with toner and the toner is transferred to paper through contact with the paper.

The histories of magnetography and electrography are briefly described on pages 306-401 of Imaging Processes and Materials Edited by Nesbitt. As noted therein, images of high resolution have not been achieved since the prior art magnetic printheads, which magnetize the magnetic tape, have not had acceptably high resolution.

U.S. Patent 3,604,326 describes a magneto-optical printing system which combines elements of magnetography and optical imaging. The system creates the latent image on the magnetic tape and develops it through the use of toner, as in standard magnetography. However, rather than transferring the developed image to paper, the system of U.S. Patent 3,604,326 utilizes the developed image as an optical mask and shines a light through the magnetic tape to the medium to be exposed. The medium is thereby exposed with the negative of the optical mask. The magnetic tape utilized by U.S. Patent 3,604,326 is a special transmissive tape, having stripes of magnetized and unmagnetized portions.

### SUMMARY OF THE INVENTION

It is an object of the present invention to provide an improved media exposure system and method utilizing an intermediate imaging assembly.

There is thus provided, in accordance with a preferred embodiment of the present invention, a media exposure system which includes a) an imaging assembly for creating a physical image on a reflective imaging surface and b) a light source for illuminating the imaging surface and for reflecting the image onto a medium to be exposed.

Preferably, the imaging assembly is a magnetic imaging assembly, the reflective imaging surface is a magnetic belt and the magnetic imaging assembly includes a magnetic printhead for locally magnetizing the magnetic belt in accordance with desired image data. Alternatively, a drum may be used instead of a belt.

In accordance with a preferred embodiment of the invention, the magnetic imaging assembly includes a) a permanent magnet for magnetizing a strip of the magnetic surface and b) a laser writing system for locally demagnetizing the strip of magnetic surface in accordance with desired image data.

Furthermore, in accordance with a preferred embodiment of the invention, the imaging assembly includes a) a surface having a photoconductive layer thereon, b) an electrostatic charger for charging the photoconductive layer, c) a laser writing system for locally discharging the photoconductive layer in accordance with desired image data thereby to produce a latent image, d) a developer for providing toner particles to charged portions of the latent image on the surface thereby to produce the physical image and e) a magnet for maintaining the toner particles on the surface while the light source illuminates the toner particles.

Preferably, the system includes surface movement apparatus for moving the reflective imaging surface thereby causing the physical binary image to move. In accordance with a preferred embodiment of the present invention, the system includes media movement apparatus for moving the medium, wherein the surface and media movement apparatus are synchronously operated.

Additionally in accordance with a preferred embodiment of the present invention, the system also includes translation apparatus for producing relative movement between the imaging system and the medium.

There is also provided, in accordance with a preferred embodiment of the present invention, a system for exposing a medium including a) an imaging assembly for creating a physical image on an imaging surface, b) a light source for illuminating the imaging surface and c) a lens for receiving illumination from the imaging surface and for concentrating the illumination onto the medium.

There is additionally provided, in accordance with a preferred embodiment of the present invention, a system for exposing a medium including a) an imaging assembly for creating a physical image on an imaging surface and b) optical apparatus for directing light reflected from the imaging surface and representing the physical image onto a medium for exposure thereof. The imaging surface and at least one of the optical apparatus and the substrate undergoes continuous movement during the exposure.

Furthermore, in accordance with a preferred embodiment of the present invention, there is provided a media exposure method comprising the steps of a) creating a physical image on a reflective imaging surface and b) illuminating the imaging surface and reflecting the image onto a medium to be exposed. Preferably, the creating step including magnetic imaging and the reflective imaging surface is a magnetic belt.

In accordance with a preferred embodiment of the present invention, the magnetic imaging step includes locally magnetizing the magnetic surface in accordance with desired image data.

In accordance with a preferred embodiment of the invention, the magnetic imaging step includes magnetizing a strip of the magnetic surface and a laser writing for locally demagnetizing the strip of magnetic surface in accordance with desired image data.

Preferably, the creating step includes the following steps:
charging a photoconductive layer;
laser writing for locally discharging the photoconductive layer in accordance with desired image data, thereby to produce a latent image;
providing toner particles to charged portions of the latent image on the surface, thereby to produce the physical image; and
magnetically maintaining toner particles on the photoconductive layer while the light source illuminates them.

In accordance with a preferred embodiment, the method includes the step of moving the reflective imaging surface thereby causing the physical image to move. Preferably, the step of moving includes the step of moving the medium, wherein the surface and media movement occur synchronously.

Additionally, in accordance with a preferred embodiment of the invention, the method includes the step of effecting relative movement between the imaging method and the medium.

Furthermore, in accordance with a preferred embodiment of the present invention, there is provided a method for exposing a medium including the steps of a) creating a physical image on an imaging surface, b) illuminating the imaging surface and c) receiving illumination from the imaging surface and for concentrating the illumination onto the medium.

Additionally, in accordance with a preferred embodiment of the present invention, there is provided a method for exposing a medium including the steps of a) creating a physical image on an imaging surface and b) directing light reflected from the imaging surface and representing the physical image onto a medium for exposure thereof. The imaging surface and the substrate undergo continuous movement during the exposure.

### BRIEF DESCRIPTION OF THE DRAWINGS

The present invention will be understood and appreciated more fully from the following detailed description taken in conjunction with the drawings in which:
Fig. 1 is an isometric illustration of a media exposure system, constructed and operative in accordance with a preferred embodiment of the present invention;
Figs. 2A and 2B are illustrations of two states of the media exposure system of Fig. 1;
Fig. 3 is a schematic, isometric illustration of a portion of an alternative media exposure system;
Fig. 4 is a schematic side view illustration of a third embodiment of the media exposure system of Fig. 1; and
Fig. 5 is an illustration of a magnet useful in the system of Fig. 4.

### DETAILED DESCRIPTION OF PRESENT INVENTION

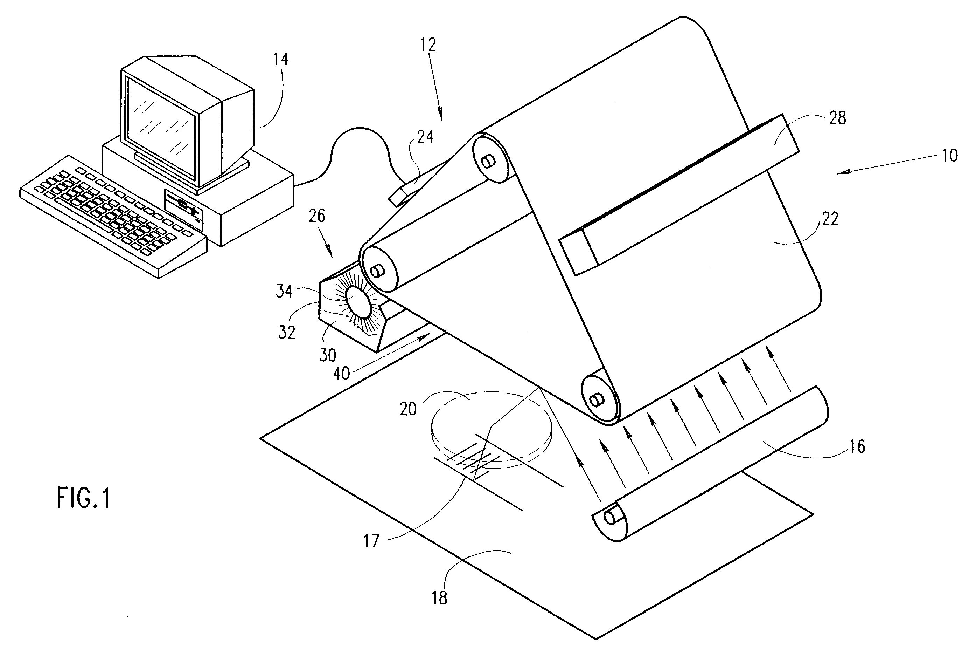

Reference is now made to Fig. 1 which illustrates a first embodiment of a media exposure system 10 of the present invention. The media exposure system shown in Fig. 1 is operative for exposing media, such as offset plates, with a low sensitivity to UV light. It will be understood that the exposure of offset plates is by way of example only; the principles of the present invention are useful for exposing many types of media.

The media exposure system 10 typically comprises an imaging assembly 12 for receiving image data from a computer system 14, for creating a latent image and for developing there from a developed image. System 10 also comprises a light source 16 for reflecting light off the developed image and onto an area 17 of a medium 18 to be exposed.

If, as optionally shown in Fig. 1, the medium 18 is an offset plate, the light source 16 is preferably a UV light source such as a metal halide lamp and system 10 additionally comprises a lens 20, such as a process lens, which is conventionally employed in the printing industry for enlargement and reduction, for reducing the size of the exposed area 17, thereby concentrating the light which exposes the medium 18. The reduction of area 17 additionally provides an increased resolution to system 10.

Imaging system 12 typically comprises a continuous, reflective, magnetizable drum or belt, such as a belt commercially available from Bull Peripherique incorporated in their MP6000 family of magnetic printers, a magnetic printhead 24, such as that described in U.S. Patent 4,342,039 to Wang, an image development system 26, such as that described in U.S. Patent 4,122,456 to Berkowitz et al, and an erase and cleaning system 28, such as that described in U.S. Patent 4,547,782.

As the magnetizable belt 22 passes the magnetic printhead 24, the printhead 24 magnetizes the portion of the belt 22 passing under it in accordance with image data received from computer 14. The resultant magnetized section of the belt 22 has thereon a "latent magnetic image" which is "developed" as it passes the image development system 26.

As is known in the art, the development process brings magnetic toner particles 30 from a container 32 to the magnetizable belt 22. Suitable magnetic toner particles 30 are conventional toners such as are utilized in the field of laser printers. Suitable magnetically responsive toners are available from 3M and Bull.

A magnetic brush 34, with a relatively small magnetic field, rotates through the container 32 and attracts a plurality of magnetic toner particles 30. When the brush 34 rotates towards the belt 22, the greater magnetic field of the magnetized sections of the belt 22 attracts the toner particles 30 towards the belt 22. Thus, the toner particles 30 are deposited onto the magnetized portions of belt 22, thereby developing the latent magnetic image into a physical, binary image.

As the belt 22 passes an area 40 after the image development system 26, the light source 16 shines light onto the belt 22. Because the belt 22 is reflective and the toner particles 30 are not, a version of the physical image is reflected from belt 22, optionally through the lens 20, onto medium 18. If lens 20 is included in the media exposure system, the exposed area 17 is typically smaller than area 40 off of which the light is reflected.

After passing area 40, the belt 22 passes erase and cleaning system 28 which removes the toner particles 27 from belt 22, returning them to container 32, and demagnetizes the magnetizable belt 22, preparing it for processing by printhead 24.

The medium 18 is typically translated while the belt 22 is translated. This is particularly important if the medium 18 is an offset plate which, as is known in the art, is not very sensitive to UV light. One way of acceptably exposing an offset plate with a digital image is described in U.S. Patent 5,049,901, incorporated herein by reference.

For an offset plate, the translation of medium 18 is synchronized with that of belt 22 and the speed of translation of medium 18 is a function of the speed of translation of belt 22 and of the extent of resolution increase provided by lens 20. The synchronization of movement ensures that, while belt 22 moves, a line of the physical, binary image on belt 22 is continually reflected onto the same line of medium 18, thereby exposing that line on the offset plate for a desired long length of time.

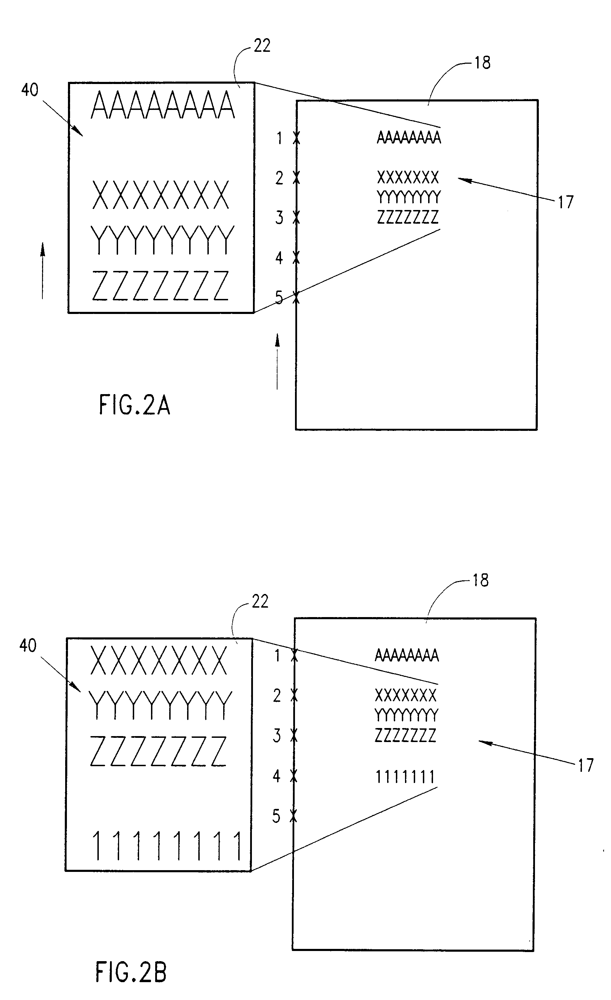

The synchronization is illustrated in Figs. 2A and 2B, to which reference is now briefly made. In Fig. 2A, a first physical image is shown in area 40 of belt 22 as is its corresponding image being exposed in area 17 of medium 18. For the purpose of illustration only, fixed reference markers 1 - 5 are shown on medium 18 and it is assumed that the lens causes no orientation changes. The image being transferred between the belt 22 and the medium 18 is a plurality of rows of the letters of the alphabet. The row of 'a's is shown in Fig. 2A, at the end of area 40, while the rows of 'x's, 'y's and 'z's are shown at the beginning of area 40. Similarly, the row of 'a's is shown at the beginning of area 17 and the row of 'z's is shown at its end.

After some time, the row of 'x's has moved to the end of area 40 (Fig. 2B) and a row of '1's has entered the area 40. During that time, the medium 18 has also moved such that the row of 'a's is outside of area 17, the row of 'x's on medium 18 is at the end of area 17 and a row of '1's is at the beginning of area 17.

The movement of the two areas 40 and 17 are synchronized such that light reflected off a row of area 40, for example off the row of 'x's, always exposes the same row of area 17.

It will be appreciated that the relative direction of movement between the belt 22 and the medium 18 depends on whether or not the lens 20 changes the orientation of the physical image.

It will further be appreciated that the relative motion between the belt 22 and the medium 18 can be produced by moving either one. If the belt 22 is to be moved, the entire media exposure system 10 is moved. Alternatively, by using fiber optics, other arrangements can be made.

Furthermore, because area 17 is typically narrower than the full width of medium 18, the media exposure system 10 typically has to expose medium 18 column by column, where each column is as wide as the width of area 17.

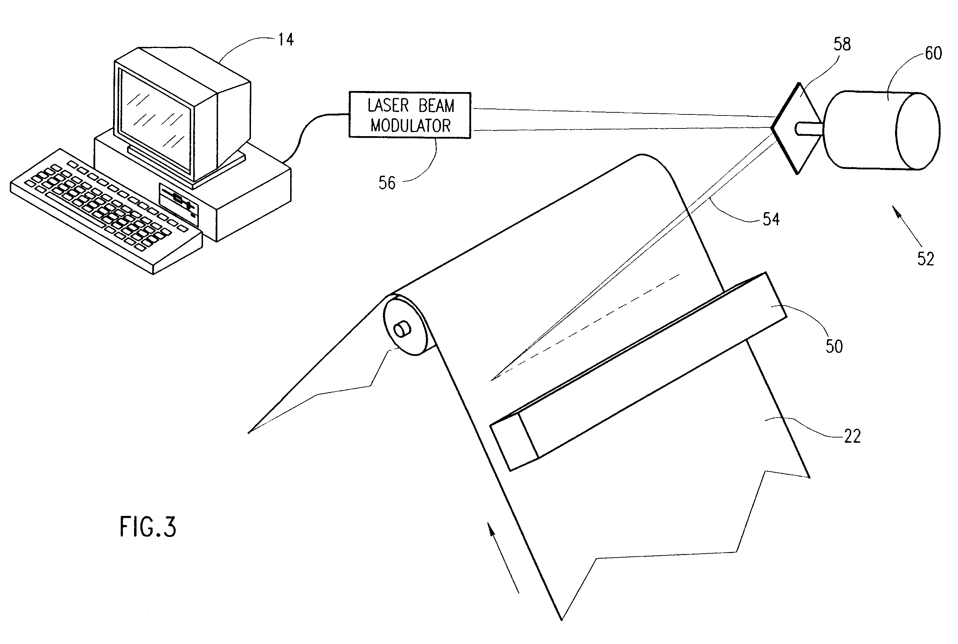

Reference is now briefly made to Fig. 3 which illustrates, in a schematic isometric format, a portion of an alternative embodiment of the media exposure system of Fig. 1. Elements which are similar in the systems of Figs. 1 and 3 have similar reference numerals.

In the system of Fig. 3, the erase and cleaning system 28 of Fig. 1 is replaced with a permanent magnet 50 and a cleaning system and the magnetic printhead 24 is replaced with a laser scanning system 52.

As before, the cleaning system removes the toner particles from the belt 22. However, instead of demagnetizing the belt 22 as in the system of Fig. 1, in this embodiment, the permanent magnet 50 fully magnetizes the belt 22.

The laser scanning system 52 scans a modulated, high intensity laser beam 54 across belt 22. Wherever the laser beam 54 hits the belt 22, it heats the belt 22 to a temperature above the critical curie temperature, thereby causing local demagnetization, typically on the order of the size of a single image unit or pixel. The laser beam 54 is modulated in accordance with image data received from computer 14 and the resultant image, the latent magnetic image, is processed as described hereinabove.

The scanning system 52 is similar to known scanning systems and, as shown, typically comprises a laser beam modulator 56, a scanning mirror 58 and a motor 60 for rotating scanning mirror 58. Other suitable scanning systems can also be utilized.

It will be appreciated that the present embodiment provides a higher resolution than the previous one, since a modulated laser beam can write pixels having a smaller area than currently available magnetic printheads.

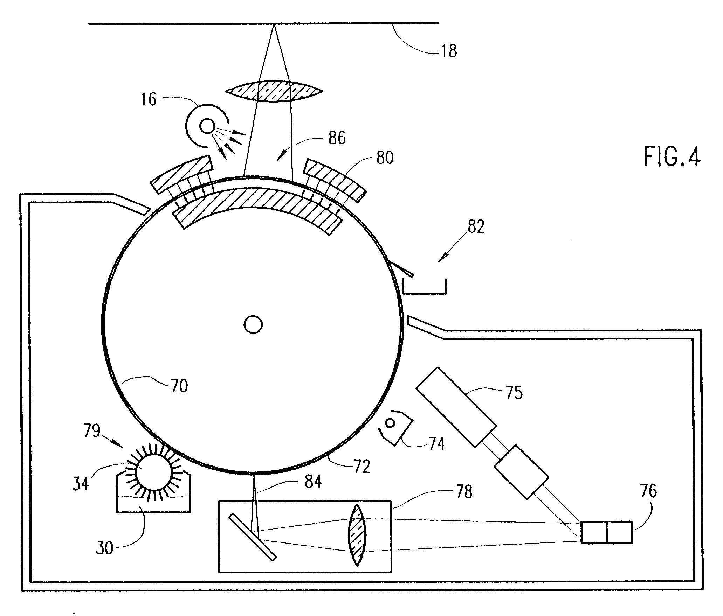

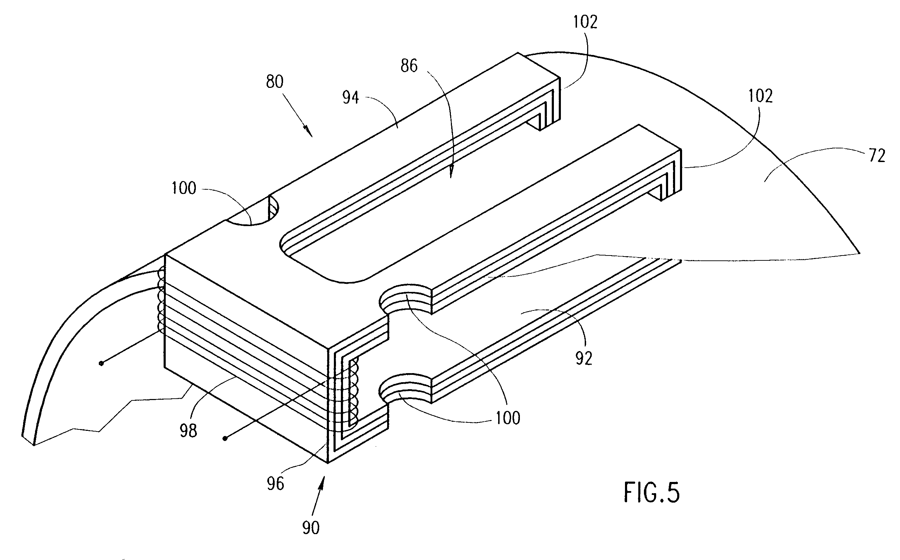

Reference is now made to Figs. 4 and 5 which respectively illustrate a schematic side view of a third embodiment of the present invention which utilizes some xerographic elements and a magnet useful in the third embodiment. As before, similar elements have similar reference numerals.

In this embodiment, the media exposure system comprises a drum 70 having a photoconductive layer 72, a electrostatic charging element 74, a light source 75, a polygonal scanner 76 and associated optics 78, an image development system 79, a uniform magnet 80 and a cleaning station 82.

The media exposure system of Fig. 4 operates as follows: Electrostatic charging element 74 first charges the entirety of the photoconductive layer 72. The light source 76 and its associated optics 78 and modulator 79 produce a modulated light beam 84, which, when caused to impinge against the charged photoconductive layer 72, causes the portions of layer 72 receiving light to conduct current, thereby locally neutralizing the charge thereat.

After exposure by the light beam 84, drum 70 has a latent image thereon which is developed by image development system 79 in a manner similar to that described hereinabove. In image development system 79, the toner particles 30 are magnetically attracted to the brush 34 but are electrically attracted to the unexposed (i.e. charged) portions of the drum 70.

A physical, binary image on drum 70 passes through magnet 80 which has an aperture 86 through which light source 16 shines onto and reflects off of the physical image on drum 70. Magnet 80 maintains a uniform magnetic field perpendicular to and directed towards the drum 70 to attract the toner particles 30 to the drum 70, thereby counteracting the loss of charge in photoconductive layer 72 due to the shining of the light of light source 16.

As shown in Fig. 5, magnet 80 is formed of a plurality of laminates and comprises a generally arched shaped yoke 90 having first and second leg portions 92 and 94 which are disposed generally inside and outside of the drum 70 respectively. A joining portion 96 is formed with a winding 98. Each of leg portions is formed with outwardly facing notches 100.

The ends 102 of each of the leg portions 92 and 94 are directed towards each other as illustrated. Leg portion 94 is bifurcated to define aperture 86 described hereinabove.

It will be appreciated that the systems illustrated hereinabove are also operative by transmission rather than reflection. In the transmissive system, the light source 16 is placed such that the magnetic drum 22 is between it and the medium 18 and the magnetic drum 22 is transmissive. Transmissive magnetic drums are described in U.S. Patent 3,604,326.

It will be appreciated by persons skilled in the art that the present invention is not limited to what has been particularly shown and described hereinabove. Rather the scope of the present invention is defined only by the claims which follow:

## Claims

1. A media exposure system comprising:
an imaging assembly for creating a physical image on a reflective imaging surface; and
a light source for illuminating said imaging surface and for reflecting said image onto a medium to be exposed.

2. A system according to claim 1 and wherein said imaging assembly is a magnetic imaging assembly and said reflective imaging surface is a magnetic surface.

3. A system according to claim 2 and wherein said magnetic imaging assembly comprises a magnetic printhead for locally magnetizing said magnetic surface in accordance with desired image data.

4. A system according to claim 1 and wherein said imaging assembly comprises:
a surface having a photoconductive layer thereon;
an electrostatic charger for charging said photoconduc tive layer;
a laser writing system for locally discharging said photoconductive layer in accordance with desired image data, thereby to produce a latent image;
a developer for providing toner particles to charged portions of said latent image on said surface, thereby to produce said physical binary image; and
a magnet for maintaining said toner particles on said surface while said light source illuminates said toner particles.

5. A system according to claim 1 and including surface movement means for moving said reflective imaging surface thereby causing said physical binary image to move.

6. A system for exposing a medium comprising:
an imaging assembly for creating a physical image on an imaging surface;
a light source for illuminating said imaging surface; and
a lens for receiving illumination from said imaging surface and for concentrating said illumination onto said medium.

7. A system for exposing a medium comprising;
an imaging assembly for creating a physical image on an imaging surface; and
optical apparatus for directing light reflected from the imaging surface and representing the physical image onto a medium for exposure thereof,
and wherein said imaging surface and at least one of said optical apparatus and said substrate undergoes continuous movement during said exposure.

8. A media exposure method comprising the steps of:
creating a physical image on a reflective imaging surface; and
illuminating said imaging surface and reflecting said image onto a medium to be exposed.

9. A method according to claim 8 and wherein said creating step comprises magnetic imaging and said reflective imaging surface is a magnetic surface.

10. A method according to claim 9 and wherein said magnetic imaging comprises locally magnetizing said magnetic surface in accordance with desired image data.

11. A method according to claim 9 and wherein said magnetic imaging comprises magnetizing a strip of said magnetic surface and a laser writing for locally demagnetizing said strip of magnetic surface in accordance with desired image data.

12. A method according to claim 8 and wherein said creating step comprises:
charging a photoconductive layer;
laser writing for locally discharging said photoconductive layer in accordance with desired image data, thereby to produce a latent image;
providing toner particles to charged portions of said latent image on said surface, thereby to produce said physical image; and
magnetically maintaining toner particles on said photoconductive layer while said light source illuminates them.

13. A method according to claim 8 and including the step of moving said reflective imaging surface thereby causing said physical image to move.

14. A method for exposing a medium comprising the steps of:
creating a physical image on an imaging surface;
illuminating said imaging surface; and
receiving illumination from said imaging surface and for concentrating said illumination onto said medium.

15. A method for exposing a medium comprising;
creating a physical image on an imaging surface; and
directing light reflected from the imaging surface and representing the physical image onto a medium for exposure thereof,
and wherein said imaging surface and said substrate undergo continuous movement during said exposure.
